# EUROPEAN PATENT SPECIFICATION

(11) **EP 3 689 495 B1**
(45) Date of publication and mention of the grant of the patent: **17.05.2023**
(21) Application number: 19250002.3
(22) Date of filing: 01.02.2019
(51) Int. Cl.: B22D 29/00, B22D 46/00, G01M 3/26, G01M 3/32, G01V 9/00

(54) **METHOD AND APPARATUS FOR INSPECTING INTERNAL CAVITIES IN CAST COMPONENTS**
VERFAHREN UND VORRICHTUNG ZUR INSPEKTION VON INNENHOHLRÄUMEN IN GUSSTEILEN
PROCÉDÉ ET APPAREIL D'INSPECTION DE CAVITÉS INTERNES DANS DES COMPOSANTS DE MOULAGE

(43) Date of publication of application: 05.08.2020
(73) Proprietor: Linamar Light Metals Belfast Limited, Belfast, BT1 3GS (GB)
(72) Inventor: McMULLAN, Raymond, Belfast BT1 3GS (GB); ROLLINS, William, Belfast BT1 3GS (GB)
(74) Representative: Regimbeau

(56) References cited:
- JP-A- H 044 967
- JP-A- H0 299 839
- JP-A- H0 742 505
- JP-A- H02 205 739
- JP-A- H05 256 728
- JP-A- H05 272 950

## Description

### FIELD OF THE INVENTION

The invention generally relates to field of casting and more precisely the field of the inspection of component obtained by casting, in particular (but not limited to) with an alloy containing aluminium, in the field of the car and engine manufacturing of the automotive industry.

Within the automotive industry various components such as cylinder Heads are cast from molten aluminium using a number of methods, for example pressure or gravity casting. Whilst the external faces of the aluminium components are often formed by a metallic die, the internal cavities such as cooling or lubrication channels are formed using a core. Often these cores are formed using a sand and binding resin which allows for a quick cured form that can follow complex geometry whilst remaining durable during casting. These cores can be assembled into a Core-Pack to form multiple cavities within a casting such as coolant (water for instance) passages, oil passages and inlet/exhaust gas passages.

Cores are often loaded into the die prior to pouring/injecting of the aluminium, once inserted within the die, the aluminium is poured/injected into the die and therefore around the cores. The cores in turn become encased within the aluminium once it has solidified. In order to form a cavity within the aluminium casting the core must be removed after the metallic solidification time. This is usually via impact on a sacrificial element of the aluminium casting followed by vibration to break the sand/resin core down.

Once completed, the sand then falls out of the casting leaving behind a cavity within the aluminium. As manufacturing processes and engine efficiency improves it is often the case that the complexity of such cores increases in order to improve performance and durability. As a result these cores often contain small cross sections and/or complex geometry.

In turn this increase in complexity often results in increased core fragility, leaving them at risk of breakage and damage. In the area in which a break occurs metal will replace the missing core geometry which can result in blocked or reduced passages within the cavity.

Another failure mode of such cavities can also originate from the machining process, in which drilling/tapping operations are performed in order for instance to link cavities and add sensor mounting positions. Debris or machining swarf from such activities can then in turn become entrapped within the cavity, reducing is cross section.

In the case of a coolant channel within an engine such breakages or blockages can result in irreparable damage and increased wear. For example a break or block within a coolant channel surrounding exhaust or intake valves could result in thermal degradation of the casting due to combustion, in turn leading to cracks, warping and loss of compression.

As a result the automated inspection of various component, in particular for automotive components such as cylinder heads has become crucial for guaranteeing quality.

### BACKGROUND ART

There are currently a number of various known technologies used for the inspection of internal cavities within components such as automotive components. Those technologies will be briefly disclosed here below.

Document US8238635 outlines a method of inspection via X-Ray in which the component to be inspected by XRay and the resulting image is compared to a master good image which is known to be defect free. Whilst being extremely effective at identifying large breakages within cores such methods cannot always definitively identify small breakages or blockages within a cavity, resulting in a defective product being presumed as good.

Additionally such methods also require a large financial outlay for the purchase, installation, maintenance and manning of such equipment when compared with other technologies. Further to this result are often subjective in that a trained operator is required to review each image and compare with the master as no numerical value is associated with the result.

Finally such methodologies do not lend themselves to large volume production as inspection time can range from upwards of 5 minutes per component, as a result creating bottlenecks in production.

Computed tomography has also been used but presents the same drawbacks as the X-Ray.

Document EP2548007 outlines a method of inspection via light-emitting and light-detecting elements inserted into the component via various openings. In terms of operation a light-emitting element (Most often Infrared) is inserted into a cavity via one opening of the component, a detecting element is then inserted into the same cavity via a separate opening of the component. The level of light emitted from the first element is then measured numerically using a photodiode or similar at the second element giving a voltage output. The level of light and therefore the degree of blockage (either from core breakage or swarf or debris, etc.) is then quantified via the voltage output. For example a completely clear cavity on a 0-10V output may provide 10V at the detection element, whilst a partially obstructed cavity on a 0-10V output may provide 5V at the detection element.

The benefits of such systems are that inspection time can be substantially compressed when compared with X-Ray or computed tomography methods, for example to an approximation of 30s per component. Measured results are again compared with a known good master but as there is a numerical output available the system can be entirely autonomous requiring minimal human intervention.

However such systems are limited with regards to their ability to identify any partial blockage within a cavity. In the example of aluminium castings the level of light reflected by the cavity wall will vary with regards to position, surface colour and surface roughness resulting in a value which is not proportional to the blockage within that cavity. Further to this such systems are limited by the position of applicable insertion points within the cavity, i.e the points in which the emitting and detecting elements can be physically inserted within the cavity. If an opening is not available for a given area then that area cannot be inspected.

In contrast to X-Ray, computed tomography or Light Level Measurement whereby conclusions are drawn on the level of flow resistance within a cavity by inspecting the cavity itself, inspection via Flow Testing directly correlates results to the level of flow resistance in the cavity, the parameter which is critical to the components function. As a result inspection directly on the flow characteristics of the cavity allows for much greater analysis of the cavity with regards to its intended functional ability.

In the example of Single Medium Back Pressure Flow Testing a single medium (often air) is forced into the cavity under pressure (for instance around 4 to 6 bars) through a measurement device at the inlet (for example an orifice plate) before exiting at a given outlet. Assuming a blockage is present within the cavity a higher than normal back pressure will be recorded at the measurement device at the inlet due to the flow restriction.

The benefits of such a system are again that of short cycle times and direct inspection of the flow restriction characteristics of the cavity in addition to the ability to inspect the complete cavity regardless of available openings (a single inlet and outlet is required).

The limitations of such as system however are primarily the induced error as a result of medium (in this example, air) compressibility. The criticality of this is not a concern for identification of fully blocked cavities however this can be a limiting factor for the correct identification of partial blockages. As the medium meets the blockage within the cavity the atoms at the flow front will accelerate and compress, this compression (for small blockages or for cavities with large volumes consisting of complex geometry) can be hidden by the upstream line pressure, as a result not registering any back pressure to indicate a blockage. Such errors can be overcome by accelerating the inflow supersonically via a sonic nozzle whereby the air becomes an incompressible medium.

However in doing so, the atoms at the flow front will be subject to temperature increases at the point of blockage, thus inducing a density change and contributing to further errors. This can then be compounded if the system does not account for changes in ambient conditions.

Finally given the example of a large volume cavity consisting of complex geometry partial and full blockages may not register a back pressure change due to the effects of the flow restriction being distributed across the entire volume. This is then exacerbated due to the single measurement point at the inlet, for example if the blockage occurs further downstream towards the outlet.

The final method for inspection of such internal cavities can be seen in document WO 2017/081500 A1 whereby a secondary medium (for example helium) is injected into a primary medium (for example air) and the time taken for the flow stream density / Humidity or composition to change is measured at the outlet. For example given a good cavity travel time (from inlet to outlet) of 10s could be compared with a bad cavity travel time of 10.5s as a result of flow restriction from a blockage.

The advantages of such a system are similar to those outlined in 1.2.3 Single Medium Back Pressure Flow Testing in addition to the identification of blockages within separate parallel channels in that the pulse of secondary medium will be present in multiple channels following injection from a single inlet. This in turn will present itself as two pulse changes in a two channel cavity at the outlet.

Such systems can be limited by medium compressibility errors as outlined previously in addition to ambient factors. Further limitations can be seen with regards to variation in travel time as a result of medium injection equipment, composition/density variation as a result of but not limited to the cavity wall boundary layer.

Document JPH0299839A describes a solution to enable inspection of a pressure leakage with a valve mounted on a cylinder head without applying an external force to the valve by closing a port of the cylinder head while the pressure is brought down to a specified negative pressure through the port.

### SUMMARY OF THE INVENTION

One aim of the invention is to provide an apparatus and a method for inspecting internal cavities of a cast component, which is efficient, quick, precise and automated.

A solution according to a first aspect of the invention is set forth in the independent apparatus claim and a solution according to a second aspect of the invention is set forth in the independent method claim. The method presented in the claim can be implemented with the apparatus presented in the claim.

In particular, in an aspect, the invention relates to an apparatus for inspecting internal cavities of a cast component comprising a cavity, the cavity communicating with the outside through an inlet opening and an outlet opening, the component being immerged in a medium, the apparatus comprising:
- a vacuum source configured to suck medium,
- a nozzle, connected to the vacuum source, and configured to be applied onto an outlet opening of the component such that the vacuum source sucks medium located inside the component, said medium exiting towards the nozzle through the outlet opening,
- a flow sensor configured to measure the flow rate or the mass flow rate of the sucked medium flowing through the nozzle, that is to say through the outlet opening.

In an embodiment, the apparatus comprises a seal, to seal the nozzle onto the outlet opening manifold.

In an embodiment, the apparatus comprises several nozzles connected to the vacuum source, each nozzle being configured to be applied onto a respective opening.

In an embodiment, the apparatus comprises a manifold located between the vacuum source and the nozzle, the manifold being configured to provide a reservoir of medium that dampens oscillations of pressure that can occurs during suction.

In an embodiment, a single manifold is located between the vacuum source and several nozzles.

In an embodiment, the apparatus comprises a pipework, which connects the vacuum source to the nozzle.

In an embodiment, the flow sensor is located within the nozzle, such that said flow sensor measures flow exiting from the outlet opening only.

In an embodiment, the flow sensor is chosen amongst: a pressure transducer, a hot wire anemometer.

In an embodiment, the vacuum source comprises a side channel blower, or a Venturi-effect device.

In an embodiment, the apparatus comprises means for regulating the vacuum, said means being preferably a valve, for instance a throttle valve (17) located in pipe work, or means implemented on the vacuum source, such as a speed control on a side channel blower

In an embodiment, the apparatus comprises a control unit, configured to control the vacuum source, and to gather the data collected by the flow sensor.

In another aspect the invention relates to an assembly comprising:
- an apparatus as described previously,
- a component comprising a cavity, at least one inlet opening and one outlet opening allowing medium to flow through the cavity, and
- a medium in which the component is immerged.

In another aspect the invention relates to a method for inspecting internal cavities of a cast component comprising at least one cavity, the cavity communicating with the outside through an inlet opening and an outlet opening, the component being immerged in a medium, the method comprising the following steps:
- (E2) sucking medium through the outlet opening,
- (E3) measuring the flow rate or the mass flow rate of the sucked medium flowing though the outlet opening to obtain a measured value of the flow rate or the mass flow rate.

In an embodiment, the method comprises a further step of:
- (E4) the measured value to a predetermined value to identify a default or a size of a default within the component.

In an embodiment, the predetermined value is obtained through a test run on a good component with a known blockage in the component.

In an embodiment, the predetermined value is obtained through a plurality of tests run on a good component with a known variable blockage in the component, so that a curve determining a correspondence between a measured value and a blockage is created, and wherein the step of comparing the measured value to a predetermined value allows to identify the size of the default.

In an embodiment, the suction is made with a pressure comprised between 90 and 100% of the pressure of the medium before sucking.

In an embodiment, the predetermined value corresponds to a blockage inferior to 50% of a given section of the cavity, preferably inferior to 30% and still preferably inferior to 20%.

In an embodiment, the measure value is corrected by taking into account temperature, pressure and humidity, for instance with theoretical equation(s).

Such a technique will be referred to as "back pressure flow testing"

Whilst possessing many of the benefits of the prior art related to pressure flow testing, the back pressure flow testing such a discloses previously also reduces the errors induced by medium compressibility as there is no line pressure forcing the medium into the system, allowing for accurate identification of blockages within applicable cavities.

Indeed, when compared to the technique of the prior art pushing air, the invention proposes to pull air. This avoids the compression effect of the air that lead to inaccuracies preventing from detecting blockage inferior to 50% of a cavity section. Indeed, although pulling air creates some expansion effect the accuracy of the method allows detecting blockage inferior to 50%, even below 20% in some experiments. This is due, amongst all, to the fact that the expansion effect is more easily predicted and corrected in the measured value.

Further benefits of the proposed system also include the ability to target specific areas for the cavity either by allowing for inspection of mass flow at various points of the component or by inducing diversion of the applied vacuum to specific channels within the cavity. This greatly reduces the error induced by large volume cavities consisting of complex geometry.

### PRESENTATION OF THE DRAWINGS

The invention will be described with reference to the drawings, in which:
FIG.1 is a schematic representation of an apparatus according to an embodiment of the invention.
FIG.2 is a schematic representation of a specific portion of an embodiment of the invention.
FIG. 3 is a diagram showing the main step of a method according to an embodiment of the invention.
FIG. 4 represent different curves of the value of mass flow rate in function of the blockage on test components.

### DETAILLED DESCRIPTION OF AN EMBODIMENT OF THE INVENTION

The invention applies to any component made from casting, and presenting cavities that needs be inspected, as disclosed in the introduction, part "field of the invention" and "background art".

In a first section, an apparatus according to the invention will be disclosed and in a second section, a method according to the invention will be disclosed.

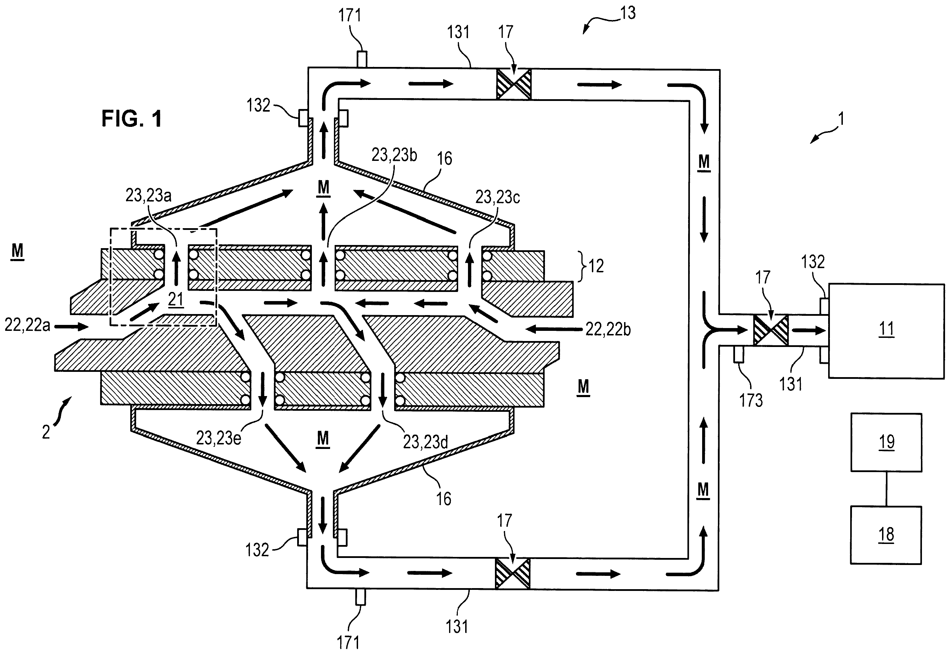

FIG. 1 represents an apparatus 1 for inspecting internal cavities with a suction pressure flow, here below referred to as "back pressure flow testing", and a component 2 to be tested positioned in relation with the apparatus.

The component 2 is generally in the automotive field, such as cylinder head.

The component 2 comprises at least one cavity 21. Since current demand from car manufacturer requires complex shape for the component 2, it usually comprises a plurality of cavities 21. A cavity 21 is defined as a volume created within the component 2 by core(s) during the casting process. The component can comprise several independent cavities (not in fluidic relation inside the component) or several dependent cavities (in fluidic relation inside the component). To simplify the description, it will be referred to as "one cavity".

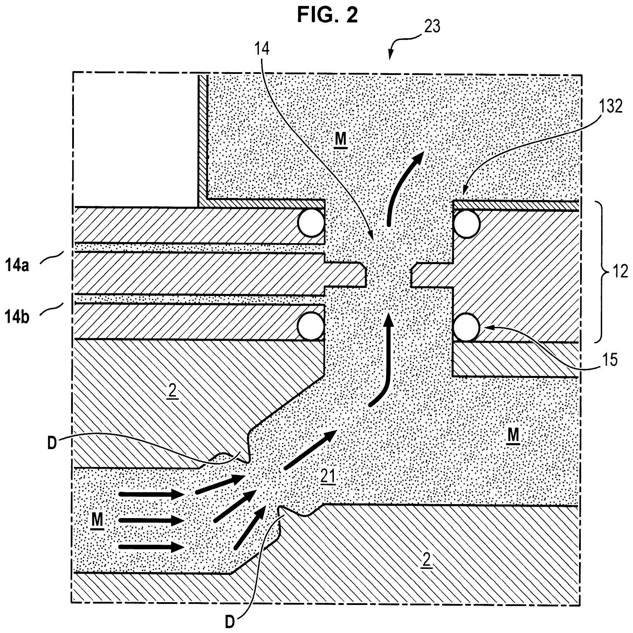

As illustrated on FIG. 2, the cavity 21 can comprise a default D, represented as a restriction or a blockage, which partially block the circulation of fluid within the cavity. A standard unit for evaluating a default D is the ratio of the free section (at the level of the default D, that is to say when the free section is the minimum) over the expected section without the default D. A 100% ratio is a fully construed cavity.

The cavity 21 is in communication with the outside (ie. the fluid around the component 2) through at least two different openings: one will be referred to as the "inlet opening" 22 and the other one will be referred to as the "outlet opening" 23. The wording "inlet" and "outlet" is defined in function of the direction of the flow of medium M flowing through them upon suction pressure applied on the inlet opening 22. As a result, a cavity can have several inlet openings 22a, 22b (two on FIG. 1) and several outlet openings 23a, 23b, 23c, 23d, 23e (five on FIG. 1). In the meaning of the present disclosure, an inlet opening 22 cannot be simultaneously an outlet opening 23.

The inlet and outlet openings 22, 23 can be shared by several cavities 21 (see FIG. 1).

As above-mentioned, for using the apparatus 1 or implementing the method of the invention, the component 2 is immerged within a medium M. Said medium M can be air, for instance at an atmospheric pressure around 1 bar, or any other gas (such a gas having a different density than air to obtain more visible results - often more dense than air). Said medium M can also be water, or any other liquid. In that case, a container (not illustrated) is provided to receive the medium M in which the component 2 is to be immerged. Preferably the medium is homogenous or can be considered as such.

By immerged, it means that the inlet openings 22 (at least one) can receive medium M by being integrally immerged. It is preferably understood that the entire component 2 is immerged, so that every cavity and the outlet opening 23 are also immerged. Otherwise, the result of the measures could be biased by remaining poaches of air, or by the inhomogeneous sucked material.

The apparatus 1 comprises a vacuum source 11, which is configured to suck the medium M through the component 2. A side channel blower or a Venturi-effect device could work as the source of vacuum 11. Its choice depends on the medium M and the level of suction pressure needed.

The vacuum source 11 can be configured to provide different levels of suction pressure (speed control for instance).

Generally speaking, the vacuum pressure applied is comprised between - 1 PaG (gauge pressure) to -98kPaG in the medium M, or, for a narrower range, between -100PaG and -2kPaG. If the pressure of the medium varies (resonance/oscillations in system) significantly between the lowermost part and the uppermost part, then the pressure of the medium M is defined as the average pressure. For instance, with air, the pressure of the medium is uniform at the atmospheric pressure of the location where the inspection is operated at Patm, which is generally around 1bar. The pressure may then be between 0,9Patm and 1 Patm (1 Patm being excluded of course otherwise there would be not vacuum).

The vacuum source 11 is connected to a nozzle 12, which is configured to be applied onto an outlet opening 23 of the component 2, as illustrated on FIG. 2. As a matter of definition, a nozzle 12 is connected to a single outlet opening 23.

In practice, a pipework 13 enables a fluidic connection in a medium-leak-tight manner between the vacuum source 11 and the nozzle 12.

Several nozzles 12, each connected to a single outlet opening 23a, 23b, 23c, 23d, 23e can be connected to the vacuum source 11, with a common part 131 of the pipework. In FIG. 1, one can distinguish several common parts 131: one is for the nozzles 12 applied onto the outlet opening 23a to 23c, one is for the nozzles 12 applied onto the outlet opening 23d and 23e, and one is the junction of the two previous common parts (which receives the suction pressure of the vacuum source 11). Different seals 132 are used throughout the pipework 13 to ensure a tight seal between connections of the pipes forming the pipework, and between the nozzle 12 and the vacuum source 11.

As illustrated on FIG. 2, a flow sensor 14 allows to measure the flow rate or the mass flow rate of the medium M flowing in the nozzle 12 from the component 2 (through the outlet opening 23). The flow sensor 14 is part of the apparatus 1. Typically, a flow sensor 14 generates a voltage signal in function of the flow rate or the mass flow rate.

The flow sensor 14 can be a pressure transducer or a hot wire anemometer.

One or two passages 14a, 14b provide a connection point to flow sensor 14. The flow sensor 14 can be comprised of a single sensor on only one of the fluid passages 14a, 14b, or a single differential sensor attached to bother passages 14a, 14b, or two sensors connected to passages 14a, 14b respectively.

In the apparatus 1, the measurement equipment formed by the flow sensors 14 are located upstream of the vacuum so that any disturbances to the mass flow are a direct result of the blockage within the cavity.

To obtain a better precision, in a preferred embodiment, the flow sensor 14 collects data only for one nozzle 12. In that case, the sensor 12 is located advantageously within the nozzle 12, as illustrated in FIG. 2. Therefore, a flow sensor 14 is provided for each outlet opening 12a, 12b, etc. that is to say for each nozzle 12.

This preferred embodiment allows identifying a default more precisely in the cavity 11 of the component since information related to a specific part of the cavity where the default is located is obtained.

Those several nozzles 12 allow the component 2 to be split into specific test areas where applicable. This in turn allows for greater accuracy as it places an even vacuum across all critical areas of the component, in contrast to a singular point in which applied vacuum or pressure is not evenly distributed and collates the entire cavity volume, potentially hiding small blockages (see below).

In another embodiment, the flow sensor 14 collects data for several nozzles and is for instance located within a common part 131 of the pipework 13. However, as previously said the measures of a default will be diluted amongst the overall values.

Sealing means or seals 15 are also provided on the nozzle 12, such that the junction between the component 12 and the apparatus 1 is sealed in leak-tight manner. O-rings or pressurized seals are convenient but other type of seals can be used, in function of the shape and/or material of component 2.

During the aspiration of the medium M, oscillation of pressure can occur depending on the geometry of the cavity 21, the number and size of outlet openings 23 and inlets openings 22, the number of nozzles 12, etc. To avoid or limit those oscillations, a vacuum manifold 16 may be used to provide a buffer zone which dampens the oscillations. The manifold is located between the nozzle(s) 12 and the vacuum source 11 and presents a given volume. Again, seals 161, 132 are provided to ensure a tight seal connection between the manifold 16 and the nozzle 12, and between the manifold 16 and the pipework 13.

The dimensions of the vacuum manifold 16 can be computed with CFD (computational fluid dynamic).

Valve(s) 17 can also be provided to control the level of suction pressure generated by the vacuum source 11. Those valves 17 are preferably located within the pipework 13. Their number typically depends on the number of common parts 131: one valve 17 for one common part 131 allows a good operability of the apparatus 1. **FIG.** 1 shows three valves 17, for the three common parts 131 of the pipework 13.

Valves 17 can be throttling valve or any other types of valves allowing the regulation of the suction pressure.

A sensor 171 can also be provided to measure the vacuum pressure within the apparatus 1 and more precisely within the nozzle 12 and the pipework 13. Advantageously, a valve sensor 171 is provided near each valve 17, so that the data collected by the valve sensor 171 can be used to control the position of the valve 17.

A control unit 18 is also provided to command the vacuum source 11 and/or the valves 16. The flow sensor(s) 14 are also connected to the control unit 17 which gathers the data and can analyse them.

The control unit 18 typically comprises a processor or a microprocessor, a memory, and input/output interfaces. Control unit can thus be a computer. Advantageously, an interface (non-illustrated) of the control unit 18 is provided to communicate with an operator. Said interface can be a display or in its minimum feature a binary indicator (green lamp/red lamp), etc.

The control unit 18 can store data about the medium (such as its density, the density in function of the temperature, the humidity, etc.). For instance, the density can be used to calculate a mass flow rate using a measured flow rate.

Different types of sensors 19 are also part of the apparatus 1, such a temperature, humidity and/or medium pressure sensor. The measured data can be used by the control unit 18 to compensate for environmental changes, thus allowing for reduction of errors as a result of changes to ambient conditions within the test environment.

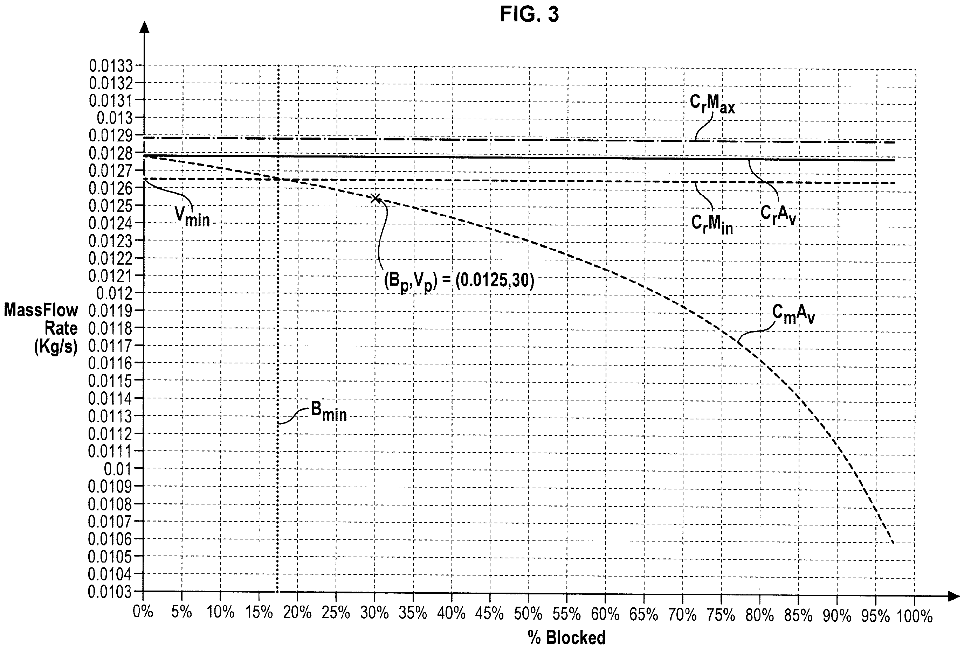

Now that the apparatus has been disclosed a method for inspecting internal cavities will be disclosed, in relation to FIG. 3.

The method consists in measuring the flow path or mass flow path going out of an outlet opening 23, to obtain a measured value Vm and to compare it with a reference value Vr. The reference value Vr will be detailed later.

In an installation step E1, the apparatus 1 is installed on the component 2, such that the nozzles 12 be placed onto the outlet openings 23 of the component. If needed, the installation step E1 also requires putting the component 2 into a container full of medium M, as previously explained.

If needed (particularly when the medium M is a liquid), an intermediate step of sucking medium M is operated during a sufficient amount of time to get rid of the air pockets located in the cavities 21. This ensures that the entirety of the concerned cavity is immerged in medium M.

In a suction step E2, medium M is sucked through the outlet opening 23. For that step, the vacuum source 11 is activated, for instance via the control unit 18. The suction pressure value is chosen in function of the medium M and the conditions of the operations, such as the shape of the component 2 and/or the temperature, the atmospheric pressure, etc. which may be obtained through sensors 19. Control of the vacuum source 11 may be achieved with the valves 17, upon instructions from the control unit 18.

It is important that the same suction pressure is applied for every tested component (of the same type and with the same protocol, of course) to obtain meaningful results.

During the suction step E2, the vacuum draws the medium M through the inlet opening 22, then trough the cavity 21 and then through the outlet opening 23 which registers an environmentally compensated mass flow as the medium M exits the component 2.

Once the flow rate or mass flow rate is stabilized (or actually in some instances transient data can be acceptable, in particular when the geometry of the component 2 is simple), in a measurement step E3, the flow rate or the mass flow rate of sucked medium going through the inspected outlet opening 23, that is to say going through the nozzle 12, is measured. The flow sensors 12 permit to obtain a measured value Vm, which is then transmitted to the control unit 18.

Naturally, the measurement step E3 is overlapped on the suction step E2.

The control unit 18 may operate some well-known data treatment (such as filtering, etc.) so obtain an exploitable measure. In some cases, the measured value in the flow rate and the control unit 18 computes the mass flow rate using the density of the medium M.

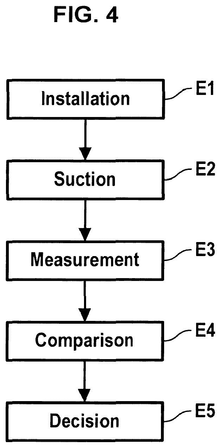

In a further step of comparison E4, the measured value Vm is compared to a predetermined value Vp, which corresponds to a predetermined blockage Bp. That predetermined value Vp has been obtained through several tests run with the same measuring method on good component 2 with a known variable default B to obtain a value of the flow rate or flow mass rate V (see **FIG. 4****,** explained later). This allows to obtain data relating the size of the blockage B in % to the measured value V. Alternatively, only a single value Vp is calculated, with a single known blockage Bp. In that case, the comparison step E4 only allows to know whether the blockage is more or less than the one corresponding to Vp. Thus, the predetermined values Vp can be of the different types, depending on whether the goal is to characterize the size of the blockage B or merely to determine if the component is good or bad.

The comparison step can be a simple subtraction (for instance Vp-Vm) or a division (Vm/Vp).

Indeed, a blockage will generate a limitation of the flow rate or the mass flow rate. Therefore, the difference between Vm and Vp is a direct consequence of the size of blockage compared to size of the known default used to determine Vp.

Besides, since the bigger the blockage, the lower the measured value Vm, it is possible to determine a minimum threshold for default identification, which corresponds to the first noticeable blockage (see **FIG.** 4 and its explanations provided herebelow). Since the accuracy with the "pull" method, that is say by sucking air, is good, the threshold for default identification is much lower than for "push method": a threshold T less than 20% blockage can be reached.

**FIG. 4** discloses a graphic showing the mass flow rate (kg/s) in function of the blockage (in %). For this graphic, over one hundred sample parts have been tested. The three horizontal curves CrMax, CrMin, CrAv represent different reference values V: CrMax is the upper limit of good parts (without defaults), CrMin is the lower limit of good parts (also called Vmin), CrAv is the average of good parts. Curve in dotted line CmAv is the measured value Vm obtained with an average of a number of test components (approximately 100 - the number depends on variations in normal production processes for the casting) with jacking screw to simulate a blockage (adjustable blockage, from 0% to almost 100%). The predetermined value Vp are chosen amongst this curve CmAv.

CrMax, CrMin and CrAv are data part of the "master good reference", which fully describes the normal variation of the components to be tested, caused by variations in the manufacturing process within acceptable limits (for instance surface finition, geometrical variance caused by tolerances/stack-up and processing marks). The applied pressure is also part of the "master good reference".

Significant results can be observed as soon as the measured value Vm is below the lowest measure of the good part, that is to say when CmAv crosses CrMin (or V=Vmin). This intersection gives the threshold Bmin, that is to say the lowest value of blockage Bmin that can be detected. In that set of experiments illustrated on **FIG. 4**, said threshold Bmin is around 17% and corresponds to a value Vmin of 0.01265kg/s. Therefore, a threshold of 20% is a reasonable value that can be achieved with the invention.

The predetermined value Vp is not directly related to the threshold value Bmin. The threshold value Bmin is the lowest noticeable blockage (in %), as explained above. It is therefore a fixed value (and not arbitrary) for a given component and protocol of the method. The predetermined value Vp is an arbitrary value (in kg/s) to sort component as GOOD or BAD given the specification of the component manufacturer. With the "pull" method, an arbitrary blockage Bp corresponding to the value Vp from 20% to more than 90% can be chosen (vs. to 50% to and more than 90% in the "push method").

At last, a decision step E5 can be implemented, in which, a GOOD/BAD output is generated based on the result of the comparison. In function of the tolerated blockage according to the client's specification (for instance Bp=30%, to which corresponds a mass flow rate of around Vp=0.01255 kg/s on **FIG. 4**), the corresponding predetermined value Vp (0.01255 kg/s) is obtained through the measures made previously. Given that the "pull" method of the invention allows choosing a tolerated blockage at least under 20%, any value between the threshold Bmin (20% here) and almost 100% can be chosen. Thus the mass flow rate value obtained for Bp = 30% becomes said predetermined value Vp.

If the measured value Vm is below the predetermined value Vp, then the component 2 is labelled as BAD on the interface (because that means the blockage is more that 30%). If the measured value is above the predetermined value, then the component 2 is labelled as GOOD on the interface (because that means the blockage is less that 30%).

Naturally, the data can be normalized or treated: for instance, its is possible to work with Vm/Vmin, to obtain a % of flow rate of mass flow rate compared to a good part. Therefore, when mentioned value of the flow rate or mass flow rate, the skilled person interprets that any value directly related to that one can be used.

As indicated previously, another advantage of the invention is the ability to inspect subpart of the component by sucking medium M over chosen outlet opening 23. Segmenting this applied vacuum also allows for tighter control of the vacuum pressure inside each nozzle 12.

Another advantage of the invention is the improvement in the compensation for environment changes such as temperature, humidity, in addition to throttling the level of vacuum applied to the component. As this level of vacuum will change with respect of such factors including inspection component conditions, environmental changes and vacuum source variation, it is important to control the level of applied vacuum to ensure that the same vacuum is applied to every test component. The combination of the set value signal for the vacuum, the measures of the sensors 171 or 14 and the measures related by the environment obtained by sensors 19 for instance can controlled via a PID controller - proportional integral derivative - or a Fuzzy logic). This control loop is used to regulate the vacuum by means of a throttling valve (pressure bleed off) or speed control of a fan producing the vacuum, etc. Ensuring this applied vacuum is throttled in a matter that meets a Master Good Reference (or preset value stored in the systems memory) every part ensures that testing is consistent.

## Claims

1. An apparatus (1) for inspecting internal cavities of a cast component (2) comprising a cavity (21), the cavity (21) communicating with the outside through an inlet opening (22) and several outlet openings (23a, 23b, 23c, 23d, 23e), the component (2) being immerged in a medium (M), the apparatus (1) comprising:
- a vacuum source (11) configured to suck medium (M),
- several nozzles (12), connected to the vacuum source (11), each nozzle (12) being configured to be applied onto a respective outlet opening (23a, 23b, 23c, 23d, 23e) of the component (20) such that the vacuum source (11) sucks medium located inside the component (2), said medium (M) exiting towards the nozzles (12) through the outlet openings (23a, 23b, 23c, 23d, 23e),
- a flow sensor (14) configured to measure the flow rate or the mass flow rate of the sucked medium (M) flowing through the nozzles (12), that is to say through the outlet openings (23a, 23b, 23c, 23d, 23e).

2. An apparatus according to claim 1, comprising a manifold (16) located between the vacuum source (11) and the nozzles (12), the manifold (16) being configured to provide a reservoir of medium that dampens oscillations of pressure that can occurs during suction.

3. An apparatus according to claim 2, wherein a single manifold is located between the vacuum source (11) and the nozzles (12).

4. An apparatus according to any of claims 1 to 3, wherein the flow sensor (14) is located within one of the nozzles (12), such that said flow sensor (14) measures flow exiting only from the outlet opening (23) on which said nozzle (12) is applied.

5. An apparatus according to any of claims 1 to 4, wherein:
- the flow sensor (14) is chosen amongst: a pressure transducer, a hot wire anemometer, and/or
- the vacuum source (11) comprises a side channel blower, or a Venturi-effect device.

6. An apparatus according to any of claims 1 to 5, comprising means for regulating the vacuum, said means being preferably a valve, for instance a throttle valve (17) located in pipe work, or means implemented on the vacuum source, such as a speed control on a side channel blower.

7. An apparatus accord to any of claims 1 to 6, comprising a control unit (18), configured to control the vacuum source (11), and to gather the data collected by the flow sensor (14).

8. An assembly comprising:
- an apparatus (1) according to any of the claims 1 to 7,
- a component (2) comprising a cavity (21), at least one inlet opening (22) and several outlet openings (23a, 23b, 23c, 23d, 23e) allowing medium (M) to flow through the cavity (21), and
- a medium in which the component (2) is immerged.

9. A method for inspecting internal cavities of a cast component (2) comprising at least one cavity (21), the cavity (21) communicating with the outside through an inlet opening (22) and several outlet openings (23a, 23b, 23c, 23d, 23e), the component (2) being immerged in a medium (M), the method comprising the following steps:
- (E2) sucking medium (M) through the outlet openings (23a, 23b, 23c, 23d, 23e),
- (E3) measuring the flow rate or the mass flow rate of the sucked medium (M) flowing though the outlet openings (23a, 23b, 23c, 23d, 23e) to obtain a measured value (Vm) of the flow rate or the mass flow rate.

10. A method according to claim 9, comprising a further step of:
- (E4) comparing the measured value (Vm) to a predetermined value (Vp) to identify a default or a size of a default within the component (2).

11. A method according to claim 10, wherein the predetermined value (Vm) is obtained through a plurality of tests run on a good component with a known variable blockage (B) in the component (2), so that a curve (CmAv) determining a correspondence between a measured value (Vm) and a blockage (B) is created, and wherein the step of comparing the measured value (Vm) to a predetermined value allows to identify the size of the default.

12. A method according to any of claims 9 to 11, where the suction is made with a pressure comprised between 90 and 100% of the pressure of the medium (M) before sucking.

13. A method according to any of claims 9 to 11, wherein the predetermined value (Vp) corresponds to a blockage inferior to 50% of a given section of the cavity, preferably inferior to 30% and still preferably inferior to 20%.

14. A method according to any of claims 9 to 13, wherein the measure value (Vm) is corrected by taking into account temperature, pressure and humidity, for instance with theoretical equation.

## Patentansprüche

1. Vorrichtung (1) zur Inspektion innerer Hohlräume eines gegossenen Bauteils (2), das einen Hohlraum (21) aufweist, wobei der Hohlraum (21) durch eine Einlassöffnung (22) und mehrere Austrittsöffnungen (23a, 23b, 23c, 23d, 23e) mit dem Außenraum in Verbindung steht, wobei das Bauteil (2) in ein Medium (M) eingetaucht ist, wobei die Vorrichtung (1) umfasst:
- eine Vakuumquelle (11), die zum Ansaugen des Mediums (M) konfiguriert ist,
- mehrere Düsen (12), die mit der Vakuumquelle (11) verbunden sind, wobei jede Düse (12) so konfiguriert ist, dass sie an einer entsprechenden Austrittsöffnung (23a, 23b, 23c, 23d, 23e) des Bauteils (20) angesetzt werden kann, so dass die Vakuumquelle (11) ein im Inneren des Bauteils (2) befindliches Medium ansaugt, wobei das Medium (M) durch die Austrittsöffnungen (23a, 23b, 23c, 23d, 23e) zu den Düsen (12) austritt,
- einen Durchflusssensor (14), der so konfiguriert ist, dass er die Durchflussrate oder die Massendurchflussrate des angesaugten Mediums (M) misst, das durch die Düsen (12), d.h. durch die Austrittsöffnungen (23a, 23b, 23c, 23d, 23e), fließt.

2. Vorrichtung nach Anspruch 1, die einen Verteiler (16) umfasst, der zwischen der Vakuumquelle (11) und den Düsen (12) angeordnet ist, wobei der Verteiler (16) so konfiguriert ist, dass er ein Reservoir für das Medium bereitstellt, das Druckschwankungen dämpft, die beim Ansaugen auftreten können.

3. Vorrichtung nach Anspruch 2, bei der ein einziger Verteiler zwischen der Vakuumquelle (11) und den Düsen (12) angeordnet ist.

4. Vorrichtung nach einem der Ansprüche 1 bis 3, bei der der Durchflusssensor (14) innerhalb einer der Düsen (12) angeordnet ist, so dass der Durchflusssensor (14) den Durchfluss misst, der nur aus der Austrittsöffnung (23) austritt, an der die Düse (12) angebracht ist.

5. Vorrichtung nach einem der Ansprüche 1 bis 4, wobei:
- der Durchflusssensor (14) ausgewählt wird aus: einem Druckmessumformer, einem Hitzdrahtanemometer, und/oder
- die Vakuumquelle (11) ein Seitenkanalgebläse oder eine Venturi-Einrichtung umfasst.

6. Vorrichtung nach einem der Ansprüche 1 bis 5, mit Mitteln zur Regelung des Vakuums, bei denen es sich vorzugsweise um ein Ventil, z. B. ein in einer Rohrleitung angeordnetes Drosselventil (17), oder um an der Vakuumquelle angebrachte Mittel, wie z. B. eine Drehzahlregelung an einem Seitenkanalgebläse, handelt.

7. Vorrichtung nach einem der Ansprüche 1 bis 6, die eine Steuereinheit (18) umfasst, die so konfiguriert ist, dass sie die Vakuumquelle (11) steuert und die von dem Durchflusssensor (14) gesammelten Daten erfasst.

8. Eine Baugruppe, die Folgendes umfasst:
- eine Vorrichtung (1) nach einem der Ansprüche 1 bis 7,
- ein Bauteil (2) mit einem Hohlraum (21), mindestens einer Einlassöffnung (22) und mehreren Austrittsöffnungen (23a, 23b, 23c, 23d, 23e), durch die ein Medium (M) fließen kann, und
- ein Medium, in das das Bauteil (2) eingetaucht ist.

9. Verfahren zur Inspektion von inneren Hohlräumen eines gegossenen Bauteils (2), das mindestens einen Hohlraum (21) aufweist, wobei der Hohlraum (21) über eine Einlassöffnung (22) und mehrere Austrittsöffnungen (23a, 23b, 23c, 23d, 23e) mit der Außenseite in Verbindung steht, wobei das Bauteil (2) in ein Medium (M) eingetaucht ist, wobei das Verfahren die folgenden Schritte umfasst:
- (E2) Ansaugen des Mediums (M) durch die Austrittsöffnungen (23a, 23b, 23c, 23d, 23e),
- (E3) Messung des Durchflusses oder des Massendurchflusses des angesaugten Mediums (M), das durch die Austrittsöffnungen (23a, 23b, 23c, 23d, 23e) strömt, um einen Messwert (Vm) für den Durchfluss oder den Massendurchfluss zu erhalten.

10. Verfahren nach Anspruch 9, umfassend einen weiteren Schritt:
- (E4) Vergleichen des gemessenen Wertes (Vm) mit einem vorbestimmten Wert (Vp), um einen Fehler oder eine Größe eines Fehlers innerhalb des Bauteils (2) zu identifizieren.

11. Verfahren nach Anspruch 10, wobei der vorbestimmte Wert (Vm) durch eine Vielzahl von Tests erhalten wird, die an einem guten Bauteil mit einer bekannten variablen Verstopfung (B) in dem Bauteil (2) durchgeführt werden, so dass eine Kurve (CmAv), die eine Entsprechung zwischen einem gemessenen Wert (Vm) und einer Verstopfung (B) bestimmt, erstellt wird, und wobei der Schritt des Vergleichens des gemessenen Wertes (Vm) mit einem vorbestimmten Wert es ermöglicht, die Größe des Fehlers zu identifizieren.

12. Verfahren nach einem der Ansprüche 9 bis 11, wobei das Ansaugen mit einem Druck erfolgt, der zwischen 90 und 100 % des Drucks des Mediums (M) vor dem Ansaugen beträgt.

13. Verfahren nach einem der Ansprüche 9 bis 11, wobei der vorbestimmte Wert (Vp) einer Verstopfung von weniger als 50 % eines bestimmten Abschnitts des Hohlraums, vorzugsweise weniger als 30 % und noch bevorzugter weniger als 20 % entspricht.

14. Verfahren nach einem der Ansprüche 9 bis 13, wobei der Messwert (Vm) unter Berücksichtigung von Temperatur, Druck und Feuchtigkeit korrigiert wird, zum Beispiel mit einer theoretischen Gleichung.

## Revendications

1. Appareil (1) pour inspecter les cavités internes d'un composant moulé (2) comprenant une cavité (21), la cavité (21) communiquant avec l'extérieur par une ouverture d'entrée (22) et plusieurs ouvertures de sortie (23a, 23b, 23c, 23d, 23e), le composant (2) étant immergé dans un fluide (M), l'appareil (1) comprenant :
- une source de vide (11) configurée pour aspirer du fluide (M),
- plusieurs buses (12), connectées à la source de vide (11), chaque buse (12) étant configurée pour être appliquée sur une ouverture de sortie respective (23a, 23b, 23c, 23d, 23e) du composant (20) de sorte que la source de vide (11) aspire le fluide situé à l'intérieur du composant (2), ledit fluide (M) sortant vers les buses (12) à travers les ouvertures de sortie (23a, 23b, 23c, 23d, 23e),
- un capteur de débit (14) configuré pour mesurer le débit ou le débit massique du fluide aspiré (M) s'écoulant à travers les buses (12), c'est-à-dire à travers les ouvertures de sortie (23a, 23b, 23c, 23d, 23e).

2. Appareil selon la revendication 1, comprenant un collecteur (16) situé entre la source de vide (11) et les buses (12), le collecteur (16) étant configuré pour fournir un réservoir de fluide qui amortit les oscillations de pression qui peuvent se produire pendant l'aspiration.

3. Appareil selon la revendication 2, dans lequel un seul collecteur est situé entre la source de vide (11) et les buses (12).

4. Appareil selon l'une quelconque des revendications 1 à 3, dans lequel le capteur de débit (14) est situé à l'intérieur de l'une des buses (12), de sorte que ledit capteur de débit (14) mesure le débit sortant uniquement de l'ouverture de sortie (23) sur laquelle ladite buse (12) est appliquée.

5. Appareil selon l'une quelconque des revendications 1 à 4, dans lequel :
- le capteur de débit (14) est choisi parmi : un transducteur de pression, un anémomètre à fil chaud, et/ou
- la source de vide (11) comprend une soufflerie à canal latéral ou un dispositif à effet Venturi.

6. Appareil selon l'une quelconque des revendications 1 à 5, comprenant des moyens de régulation du vide, ces moyens étant de préférence une vanne, par exemple une vanne d'étranglement (17) située dans la tuyauterie, ou des moyens mis en oeuvre sur la source de vide, tels qu'un régulateur de vitesse sur une soufflerie à canal latéral.

7. Appareil selon l'une quelconque des revendications 1 à 6, comprenant une unité de commande (18), configurée pour commander la source de vide (11) et pour recueillir les données collectées par le capteur de débit (14).

8. Un ensemble comprenant :
- un appareil (1) selon l'une quelconque des revendications 1 à 7,
- un composant (2) comprenant une cavité (21), au moins une ouverture d'entrée (22) et plusieurs ouvertures de sortie (23 a, 23b, 23c, 23d, 23e) permettant à du fluide (M) de s'écouler à travers la cavité (21), et
- un fluide dans lequel le composant (2) est immergé.

9. Procédé d'inspection des cavités internes d'un composant moulé (2) comprenant au moins une cavité (21), la cavité (21) communiquant avec l'extérieur par une ouverture d'entrée (22) et plusieurs ouvertures de sortie (23a, 23b, 23c, 23d, 23e), le composant (2) étant immergé dans un fluide (M), le procédé comprenant les étapes suivantes :
- (E2) aspirer le fluide (M) par les orifices de sortie (23a, 23b, 23c, 23d, 23e),
- (E3) mesurer le débit ou le débit massique du fluide aspiré (M) s'écoulant par les orifices de sortie (23a, 23b, 23c, 23d, 23e) pour obtenir une valeur mesurée (Vm) du débit ou du débit massique.

10. Procédé selon la revendication 9, comprenant une étape supplémentaire consistant à :
- (E4) comparer la valeur mesurée (Vm) à une valeur prédéterminée (Vp) pour identifier un défaut ou une taille de défaut dans le composant (2).

11. Procédé selon la revendication 10, dans lequel la valeur prédéterminée (Vm) est obtenue par une pluralité de tests effectués sur un bon composant avec un blocage variable connu (B) dans le composant (2), de sorte qu'une courbe (CmAv) déterminant une correspondance entre une valeur mesurée (Vm) et un blocage (B) est créée, et dans lequel l'étape de comparaison de la valeur mesurée (Vm) à une valeur prédéterminée permet d'identifier la taille de la défaillance.

12. Procédé selon l'une quelconque des revendications 9 à 11, où l'aspiration se fait à une pression comprise entre 90 et 100% de la pression du fluide (M) avant aspiration.

13. Procédé selon l'une quelconque des revendications 9 à 11, dans lequel la valeur prédéterminée (Vp) correspond à un blocage inférieur à 50 % d'une section donnée de la cavité, de préférence inférieur à 30 % et encore de préférence inférieur à 20 0/0^{.}

14. Procédé selon l'une quelconque des revendications 9 à 13, dans lequel la valeur mesurée (Vm) est corrigée en tenant compte de la température, de la pression et de l'humidité, par exemple à l'aide d'une équation théorique.
